# EUROPÄISCHE PATENTSCHRIFT

(11) **EP 0 827 561 B1**
(45) Veröffentlichungstag und Bekanntmachung des Hinweises auf die Patenterteilung: **25.11.1998**
(21) Anmeldenummer: 96916037.3
(22) Anmeldetag: 10.05.1996
(51) Int. Cl.: E04D 12/00

(54) **UNTERSPANNBAHN UND VERWENDUNG DERSELBEN**
INSULATING SUBFLOOR WEB FOR ROOFS AND ITS USE
BANDE DE REVETEMENT ISOLANT DE TOITS ET SON UTILISATION

(30) Priorität: 22.05.1995 DE 19518687; 11.12.1995 DE 19546123
(43) Veröffentlichungstag der Anmeldung: 11.03.1998
(73) Patentinhaber: Akzo Nobel N.V., 6824 BM Arnhem (NL)
(72) Erfinder: VAN DE VEN, Henricus, Joannes, Maria, NL-6825 CT Arnhem (NL); MADEREK, Eugeniusz, D-42275 Wuppertal (DE); SPIJKERS, Jozef, Christiaan, Wilhelmus, D-72781 Haan (DE)
(74) Vertreter: Fett, Günter
(86) Internationale Anmeldenummer: EP9602000
(87) Internationale Veröffentlichungsnummer: WO9637667

(56) Entgegenhaltungen:
- EP-A- 0 167 714
- EP-A- 0 169 308
- EP-A- 0 178 740
- EP-A- 0 183 266
- EP-A- 0 365 129
- EP-A- 0 378 015
- EP-A- 0 708 212
- US-A- 3 899 623
- DATABASE WPI Week 8416 Derwent Publications Ltd., London, GB; AN 84-096829 XP002011809 & JP,A,59 035 056 (TEIJIN KK) , 25.Februar 1984

## Beschreibung

Die Erfindung betrifft eine Unterspannbahn zum Einbau in Dächern zur Verhinderung von Wärmekonvektionsverlusten und zur Verbesserung des Raumklimas, welche eine nichtporöse, wasserdichte, wasserdampfdurchlässige Funktionsschicht aufweist, die Verwendung derselben und Verfahren zur Herstellung von wärmeisolierten, Wärmekonvektionsverlust vermeidenden Dächern.

Der bauliche Wärmeschutz von Wohngebäuden kann dadurch wesentlich verbessert werden, daß die Dächer mit wärmeisolierendem Material versehen werden. Dadurch kann die durch die Hülle eines Gebäudes nach außen verlorengehende Wärmemenge (Transmissionswärmeverlust) erheblich reduziert werden. Um auch den Konvektionswärmeverlust, der durch z.B. Spalten, Öffnungen und Risse in der Schalung des Dachs hervorgerufen wird, zu unterbinden, wird gefordert, daß die wärmeübertragende Umfassungsfläche eines Gebäudes dauerhaft luftundurchlässig sein muß.

Im Falle eines unbelüfteten Dachs (Warmdach), welches aus einer Schale besteht und bei dem die Raumdecke, die Wärmedämmschicht und die Dachhaut verbunden sind, wird z.B. bei einem Flachdach die luftundurchlässige Schicht oder Abdeckung zwischen der Wärmedämmung und der Trennschicht angeordnet, wobei die Trennschicht eine starre Verbindung von Tragschale und Abdeckung verhindern soll. Bei den flachgeneigten unbelüfteten Dächern zeigt sich der Nachteil, daß durch die Verwendung von luftundurchlässigen und feuchtigkeitsundurchlässigen Abdeckungen die Austrocknungsgeschwindigkeit des eingebauten Holzes, wie Dachbalken, Holzdachschalung etc. insbesondere bei der Verwendung von baufrischem oder schnittfrischem Holz durch die dampfsperrende Wirkung der Abdeckung stark verlangsamt wird. Je dampfsperrender die Abdeckung ist, desto ungünstiger ist die Austrocknung. Das bedeutet, daß die Gefahr des Befalls des Holzes mit Pilzen wie Bläue-Schimmel-Schwammbildung besteht; ein Umstand, welcher offensichtlich zur gesundheitlichen Beeinträchtigung der Benutzer der Dachräumlichkeiten führt.

Falls das Dach keine großen Gebäudetiefen und ungehinderte Belüftungsmöglichkeiten an den vier Dachseiten bietet, eröffnet sich die Installation eines belüfteten Dachs (Kaltdach), welches aus zwei Schalen besteht, i.e. die obere Schale aus der Dachdeckung und der Unterspannbahn und die untere Schale aus der Raumdecke mit der dazwischenliegenden Wärmedämmschicht, wobei zur Verhinderung von Tauwasserbildung der Raum zwischen den Schalen durchlüftet wird. Üblicherweise befindet sich hierbei beispielsweise eine Unterspannbahn auf derAußenseite der Sparren oder ist auf der Außenseite der auf die Sparren angebrachten Holzschalung angeordnet.

Falls das Dach eine Schalung auf der der Dachgeschoßwohnung abgewandten Seite aufweist, wird üblicherweise die Unterspannbahn auf der Dachschalung - also zwischen derselben und den Konterlatten- angebracht. Falls das Dach keine Schalung aufweist, kann sich herkömmlicherweise die Unterspannbahn zwischen den Sparren und den Konterlatten befinden. Weiterhin ist es ebenfalls möglich, bei Fehlen der Schalung die Unterspannbahn oberhalb der Sparren -also zwischen den auf den Sparren angebrachten Konterlatten und den Dachlatten- anzukoppeln.

Falls nun die Unterspannbahn nicht wasserdampfdurchlässig ist, kann unter Umständen bei unzureichender Belüftung des Zwischenraums - oder auch Belüftungsraum genannt - zwischen der unteren und der oberen Schale nur in begrenztem Maße Feuchtigkeit abtransportiert werden und es zeigt sich hierbei, daß die als Holzvertäfelung oder Holzpaneel ausgestaltete Innenschalung der Dachgeschoßwohnung einer besonders bei warmer Luft vorhandenen hohen Luftfeuchtigkeit ausgesetzt ist.

Außenseite ist in der vorliegenden Beschreibung mit der der Dachgeschoßwohnung abgewandten Seite z.B. der Sparren gleichzusetzen, das bedeutet, daß beispielsweise eine Lage auf oder oberhalb der Sparren angeordnet sein kann. Innenseite ist mit der der Dachgeschoßwohnung zugewandten Seite z.B. der Sparren gleichzusetzen, das heißt, daß z.B. eine Lage auf oder vor der der Dachgeschoßwohnung zugewandten Seite der Sparren angebracht sein kann.

Nachteilig erweist es sich hierbei, daß das Holz die Feuchtigkeit aufnimmt, Volumenänderungen auftreten und die Feuchtigkeit einen hervorragenden Nährboden für Pilze und Bakterien bildet, so daß es erforderlich ist, das Holz einer chemischen Behandlung zu unterziehen. Es erweist sich hierbei, daß trotz der chemischen Behandlung des Holzes insbesondere die Bläue-Schimmel-Schwammbildung nicht gänzlich vermieden werden kann, da trotz der Wärmedämmung eine Kondensation der mit Wasserdampf angereicherten warmen Luft an Holzbereichen, welche über Kältebrücken niedrigere Temperaturen aufweisen, also z.B. an Außenwanddecken, nicht zu verhindern ist.

Als Isolationsschicht werden solche verwendet, die aus organischen und / oder anorganischen Dämmstoffen bestehen kann. Als anorganische faserige Dämmstoffe eignen sich hierbei Glas-, Stein-, Schlackenwolle in Form von mattenartigem Gewebe oder Filzen. Diese zeichnen sich durch ein geringes Gewicht, hohe Wärmedämmung, schallschluckende Eigenschaften, Nichtbrennbarkeit, Fäulnisbeständigkeit und durch die Fähigkeit aus, aufgrund ihrer Porigkeit und Faserigkeit Feuchtigkeit auf der Innenseite aufzunehmen und diese wieder auf der Außenseite abzugeben. Auch bei Verwendung dieser Materialien ist ein hinreichender Feuchtigkeitstransport nach außen erforderlich.

So offenbart die DE-OS 42 01 353 eine Isolierschalung für Dächer und Wände, die mit Flächen aus nebeneinanderliegenden Schalungselementen mit innen- oder außenseitig angebrachten Schichten bedeckt ist, sowie in den Schalungselementen eingeordnete Isolationschichten, wobei die Schalungselemente auf mindestens einer Seite Ausnehmungen aufweisen, die mit einer Sperrschicht überdeckt sind. Diese Isolierschalung unterliegt jedoch aufgrund der Verwendung natürlicher Rohstoffe, insbesondere von Holz oder von dem Holz verwandten Materialien, einem Alterungsprozeß und müssen, um einen Pilz- und Schimmelbefall zu verhindern, mit den im Hausbau unerwünschten Imprägnier- und Schutzmittel behandelt werden.

Unterspannbahnen sind üblicherweise wasserdichte, fadenverstärkte Kunststoffolien oder Bitumenbahnen mit Gewebeeinlagen, die die Aufgabe haben, den durch Fugen und Ritzen der Dachdeckung eingetriebenen Schlagregen und Flugschnee sowie Schmelzwasserrückstau aufzunehmen und abzuleiten. Außerdem sollen sie Ruß und Staub abhalten. Diese werden üblicherweise auf der der Dachgeschoßwohnung abgewandten Seite der Wärmedämmschicht verlegt. Bei Kaltdächern ist herkömmlicherweise die Unterspannbahn derart verlegt, daß ein freier zur Ent- und Belüftung geeigneter Zwischenraum - oder auch Belüftungsraum genannt - zwischen der Wärmedämmschicht und der Unterspannbahn sich befindet, welcher über z.B. Zuöffnungen an den Traufkanten mit der Außenluft in Verbindung steht. Auch hier zeigt sich, daß bei ungenügender Belüftung des Belüftungsraums an Stellen - sogenannte Toträume -, welche nur unzureichend einer Belüftung ausgesetzt sind, Tauwasser auftritt und einen starken und dauernden Pilzbefall bedingt, was durch den Einsatz von chemisch behandeltem Holztragewerk zu verhindern versucht wird.

Verstärkt wird der Feuchtigkeitsausfall dadurch, daß heute aus Energiespargründen vielfach weniger und ungleichmäßiger geheizt wird, so daß in kalten und ausgekühlten Räumlichkeiten eine starke Kondensation zu finden ist, da eine kältere Raumluft aber schneller mit Wasserdampf gesättigt ist und somit weniger Feuchtigkeit aufzunehmen vermag.

Überdies reichert sich die Innenraumluft in den mit chemisch behandeltem Holz versehenen Dachgeschoßwohnungen stark mit den aus dem Holz diffundierenden Fungiziden und Insektiziden an, so daß der Benutzer gezwungen ist, zwecks Vermeidung gesundheitlicher Beeinträchtigungen durch die hohen Schadstoffkonzentrationen in der Raumluft häufig zu lüften, ein Umstand, der die Heizungskosten unangemessen in die Höhe treibt.

Um die o. g. Nachteile zu beseitigen, schlägt die US-Patentschrift 4 684 568 die Verwendung einer wasserdampfdurchlässigen wasserdichten Folie vor, wobei ein Polypropylenharz auf die Oberfläche einer Gewebeschicht aufgetragen wird, so daß die Gewebeschicht wasser- und dampfundurchlässig wird. Anschließendes Kalandrieren stellt die Wasserdampfdurchlässigkeit der Folie her unter Beibehaltung der Wasserdichtigkeit. Dieser Stand der Technik übersieht hierbei vollkommen, daß die wasserdampfdurchlässige Schicht nicht nur wasserdampfdurchlässig und wasserdicht sein soll, sondern auch aufgrund der hohen mechanischen und thermischen Belastung der Folie im Dachbereich diese zusätzlich eine hohe Reißfestigkeit und einen hohen Schmelzpunkt aufweisen muß, so daß die durch Wind entstehenden Staudrücke und Saugkräfte insbesondere bei Kaltdächern auf lange Zeit nicht zu Rißbildungen und Ermüdung der Folie führen. Zudem übersieht der Stand der Technik völlig den Umstand, daß, je geringer die Neigung eines Dachs ist, die Anforderungen an die thermische Belastbarkeit und Dauerhaftigkeit der Wasserdampfdurchlässigkeit der Folie auch bei unwirtlicher Witterung wie Frost und Schlagregen desto größer sind. Die Schwierigkeiten werden von diesem Stand der Technik nicht erkannt, geschweige dann gelöst.

Aus EP-A-0 167 714 ist eine Unterspannbahn aus Kunststoff bekannt, welche aus Polyether-Block-Amiden des hydrophilen Typs geformt ist, wobei die Unterspannbahn als Feuchtigkeitsspeicher ausgebildet ist. Diese Unterspannbahn besteht lediglich aus einer Schicht aus diesem Polymeren und weist keine ausreichende statische Festigkeit auf, sodaß bei punktweiser mechanischer Belastung die Folie leicht verletzt und wasserundicht wird, wie der Anmelder selbst in einer späteren Anmeldung (EP-A-0 708 212) ausführt. Aufgrund ihrer hohen Wasseraufnahmefähigkeit ergibt sich immer dann, wenn viel Wasser in der Unterspannbahn gespeichert ist, daß beim Verdunsten des Wassers und der dabei entstehenden Verdunstungskälte weitere in der Luft befindliche Feuchtigkeit an der Unterspannbahn kondensiert.

Desweiteren ist aus EP-A-0 169 308 eine Unterspannbahn bekannt geworden, die aus einer Polyurethanfolie besteht, welche mit einer Vliesschicht belegt ist. Diese Unterspannbahn weist weist in der Regel zu geringe Wasserdampfdurchlässigkeiten auf. Wie der Anmelder dieser Schrift in der bereits genannten späteren Anmeldung nach Art. 54(3) EPÜ (EP-A-0 708 212) ausführt, ist auch schon versucht worden, die Vorteile der beiden oben genannten Unterspannbahnen zu kombinieren, indem eine PEBA-Kunststoffolie auf einer schützenden Vliesschicht angeordnet und mit dieser fest verbunden wird. Es habe sich aber gezeigt, daß sich die PEBA-Folie bei Anwesenheit von Wasser innerhalb kurzer Zeit lokal von der Vliesschicht ablöse und die Unterspannbahn dadurch unbrauchbar werde. Insofern wird in EP-A-0 708 212, welche erst nach dem Prioritätstag der vorliegenden Anmeldung veröffentlicht wurde, vorgeschlagen, daß die Unterspannbahn nunmehr einen dreischichtigen Aufbau aufweisen soll, wobei zwischen zwei Vliesschichten eine Sperrschicht angeordnet wird, welche wasserdicht und wasserdampfdurchlässig ist. Eine derartige Unterspannbahn ist sehr aufwendig im Aufbau.

Der Erfindung liegt somit die Aufgabe zugrunde, eine Unterspannbahn bereitzustellen, welche die o.g. Nachteile des Stands der Technik nicht aufweist. Darüber hinaus sollte es möglich sein, daß die Unterspannbahn derart beschaffen ist - also gering an Gewicht sowie mit ausreichender Reißfestigkeit und dadurch leicht verarbeitbar bzw., daß ein rasches Verlegen ermöglicht wird, um bereits als provisorischer Dachschutz kurzfristig vor Regen und Wind zu schützen.

Weiterhin sollte die Unterspannbahn gegen das Eintreten von Sprühnässe, Flugschnee und Staub Schutz bieten und eine ausreichende Reißfestigkeit gegen Windsog und Windruck gewährleistet, ohne dadurch an der Fähigkeit, wasserdampfdurchlässig und wasserdicht zu sein, einzubüßen.

Da Schrägdächer im Gegensatz zu Flachdächern im allgemeinen preis- und unterhaltsgünstiger sind, sollte überdies der Einsatz der Abdeckung in großflächigen Feucht-Gebäulichkeiten in der Landwirtschaft z.B. in Tierställen möglich sein, ohne daß ein Durchhängen zwischen großdimensionierten Sparrenabständen aufgrund mangelnder Zugfestigkeit, wie es bisher bei herkömmlichen Abdeckungen zu beobachten ist, auftritt.

Die Aufgabe wird gelöst durch die erfindungsgemäße Unterspannbahn zum Einbau in Dächern zur Verhinderung von Wärmekonvektionsverlusten und zur Verbesserung des Raumklimas, welche zweischichtig aufgebaut ist und aus einer nichtporösen, wasserdichten, wasserdampfdurchlässigen Funktionsschicht, welche Polymere auf Polyetherestergrundlage und/oder Polyetheramidgrundlage enthält, und einer wasserdampfdurchlässigen, synthetische Chemiefasern enthaltenden Stützschicht besteht.

Es ist zu beobachten, daß die erfindungsgemäße Unterspannbahn aufgrund ihrer hohen Wasserdampfdurchlässigkeit von über 2000 g/m² (24 Std. nach ASTM E 96-66 modifiziert) den Durchtritt der Luftfeuchtigkeit insbesondere bei sehr warmer Temperatur aus dem Zwischenraum, wie er bei einem Kaltdach zu finden ist, nach außen dermaßen in hervorragender Weise ermöglicht, daß sich ein Feuchtigkeitsniederschlag insbesondere an Kältebrücken mit niedriger Oberflächentemperatur z.B. an Konterlattungen zwischen Dachziegeln und Unterspannbahn oft vermeiden läßt.

Dazu ist insbesondere bei belüfteten Dächern festzustellen, daß das Dachtragwerk, welches aus Sparren, Kehlbalken, Knaggen und unter Umständen Pfosten besteht, einer deutlich geringeren chemischen Imprägnierung oder Präparierung bedarf, da wegen der ausgezeichneten und dauerhaften Wasserdampfdurchlässigkeit der erfindungsgemäßen Unterspannbahn keine Schimmel- oder Schwammbildung auftreten.

Verwendung findet die erfindungsgemäße Unterspannbahn in Sparren-, Kehlbalken-, Pfettendächern, Spreng-, Hängewerken und freigespannten Bindern.

Auch kann in diesem Zusammenhang die herkömmlicherweise bei Warmdächern durchzuführende chemische Behandlung der Holzvertäfelung des Innenraums mit Fungiziden und Pestiziden entfallen, weil gleichfalls wegen des raschen Durchtritts von Wasserdampf durch die erfindungsgemäße Unterspannbahn der feuchte Nährboden den Pilzen und Bakterien entzogen wird. Dabei darf nicht außer acht gelassen werden, daß es Wärmedämmungen gibt, die, falls sie z.B. porös sind, sehr wohl imstande sind, die vom Innenraum der Dachgeschoßwohnung diffundierte Feuchtigkeit aufzunehmen und nach außen abzugeben.

Die erfindungsgemäße Unterspannbahn ermöglicht aufgrund z.B. ihres geringen Gewichts ein rasches Verlegen auf den Konterlatten innerhalb eines kurzen Zeitraums von beispielsweise einem Arbeitstag oder wenigen Stunden bei einem üblichen Ein-Familienhaus, so daß die erfindungsgemäße Unterspannbahn als provisorischer, regendichter und wasserdampfdurchlässiger Dachschutz Schutz bietet gegenüber Wind und Regen in hinreichendem Maße und zudem das Austrocknen des Holzes, welches sich unterhalb der erfindungsgemäßen Unterspannbahn befindet, durch ihre hohe Wasserdampfdurchlässigkeit nicht einschränkt. Zudem eignet sich die erfindungsgemäße Unterspannbahn aufgrund ihrer leichten Handhabbarkeit und hinreichenden Reißfestigkeit als Behelfsabdeckung von Dachöffnungen, welche z.B. leicht durch Unwetter oder Brand entstehen können.

In einer Ausführungsform des Erfindungsgegenstands ist auf einer Seite der Funktionsschicht eine wasserdampfdurchlässige Stützschicht aufgetragen, wobei vorzugsweise die wasserdampfdurchlässige Stützschicht porös ist. Dabei zeigt sich, daß durch die Stützschicht, die Funktionsschicht oder das Laminat der erfindungsgemäßen Unterspannbahn vor den beim Verlegen der Unterspannbahn durch die Handwerker möglicherweise auftretenden mechanischen Beschädigungen bewahrt wird.

Vorteilhaft ist es, wenn die Stützschicht ein Vlies, Filz, Wirkware und/oder Gewebe ist, wobei diese aus Chemiefasern hergestellt sind. Als Chemiefasern erweisen sich die synthetischen Fasern wie Polyester-, Polyamid-, Polyacryl-, Polyvinylchloridfasern oder Mischungen derselben als besonders geeignet.

Durch die Anordnung einer mit synthetischen Chemiefasern hergestellten Stützschicht auf der Funktionsschicht ist es möglich, die erfindungsgemäße Unterspannbahn in landwirtschaftlichen Feuchtbetrieben wie Kuh- und Schweineställe zu verwenden, weil erstens größere Sparrenabstände mit der Unterspannbahn ohne weitere Stützung versehen werden können und zweitens Chemiefasern im allgemeinen keinen Nährboden für die häufig in Tierställen anzutreffenden Pilze und Schwämme bilden.

Die Stützschicht kann einen fadenverstärkten oder gitterverstärkten Aufbau unter Ausbildung von Bändern oder Streifen aus textilem Material aufweisen.

Dabei zeigt sich, daß das Gewebe ein Flächengewicht von 30 bis 500 g/m², vorzugsweise von 50 bis 250 g/m² aufweisen kann. Es ist möglich, die Funktionsschicht mit der Stützschicht punkt-, gitter-, insel-, labyrinth- oder streifenförmig zu verkleben.

Von Vorteil ist es, wenn die Funktionsschicht eine Schichtdicke von 10 bis 300 µm, vorzugsweise 30 bis 200 µm, noch mehr bevorzugt 50 bis 100 bzw. 25 - 100 µm, aufweist. Wird zum Beispiel die erfindungsgemäße Unterspannbahn als einschichtige Folie verwendet, so ist eine Schichtdicke der Funktionsschicht von 50 bis 1000 µm vorteilhaft, im Falle der Verwendung als mehrschichtiger Film ist hingegen eine Schichtdicke der Funktionsschicht von 10 bis 50 µm besonders von Vorteil.

Die erfindungsgemäße Unterspannbahn kann in Form von Bahn, Blatt oder Platte ausgebildet sein. Die bahn- oder blattförmige Unterspannbahn kann aufgerollt, leicht als Rollen transportiert werden und ist durch eine durch schnelles und einfaches Entrollen auf Dächern bedingte, angenehme, ohne Mühe erforderliche und unkomplizierte Handhabbarkeit charakterisiert.

In einer Ausführungsform der erfindungsgemäßen Unterspannbahn können die Polymere Copolyetherester (vgl. EP-A-0 178 740 oder EP-A-0 365 129) sein, die sich von längerkettigen Polyglykolen, kurzkettigen Glykolen mit 2 bis 4 Kohlenstoffatomen und Dicarbonsäuren ableiten, wobei vorzugsweise die Polymere Copolyetherester sind, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 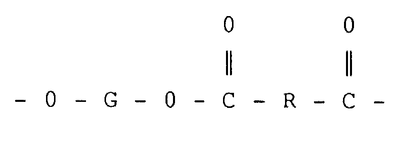 und die kurzkettigen Estereinheiten der Formel 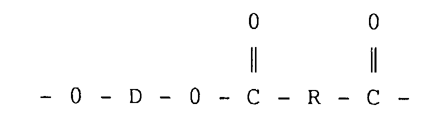 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew% des langkettigen Glykols ein Atomverhältnis von Kohlenstoff zu Sauerstoff zwischen 2,0 und 2,4 besitzen und 15 bis 50 Gew% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol% der verwendeten Dicarbonsäure aus Terephthalsäure oder ihren esterbildenden Äquivalenten und zumindest 80 Mol des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20 beträgt und die kurzkettigen Estereinheiten 40 - 80 Gew des Copolyetheresters betragen.

Ganz besonders bevorzugt ist die erfindungsgemäße Unterspannbahn, bei der die Polymere ganz oder teilweise Copolyetherester sind, worin mindestens 70 Mol% der verwendeten Dicarbonsäure 2,6-Naphthalindicarbonsäure oder deren Ester bildenden Äquivalente sind und bei dem mindestens 70 Mol% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende -quivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew% des Copolyetheresters ausmachen.

Zudem können die Polymere Copolyetherester sein, worin die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 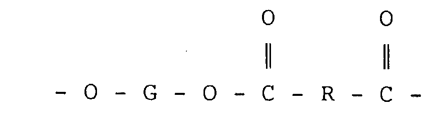 und die kurzkettigen Estereinheiten der Formel 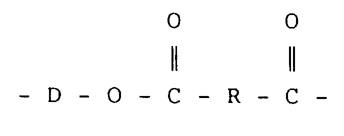 entsprechen, wobei G einen zweiwertigen Rest darstellt, der nach der Entfernung von endständigen Hydroxylgruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew% des langkettigen Glykols ein Atomverhältnis von Kohlenstoff zu Sauerstoff zwischen 2,0 und 2,4 besitzen und 15 bis 50 Gew% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol % von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew% des Copolyetheresters betragen.

Unter der Voraussetzung, daß die gesamte Dachkonstruktion oder das Dach ausgewogen wasserdampfdurchlässig konzipiert ist, beobachtet man, energetische Vorteile bei der Verwendung von der erfindungsgemäßen Unterspannbahn in Dachgeschoßwohnung. Abgesehen von dem zwecks Gasaustauschs notwendigen Lüften der Dachgeschoßwohnung ist durch die Verwendung der nicht porösen, wasserdampfdurchlässigen, wasserdichten Funktionschicht aus Copolyetherester-Polymere eine ständige Lüftung der Räumlichkeiten aufgrund der hervorragenden Atmungsaktivität sprich Feuchtigkeitsdiffusion nicht mehr erforderlich, weil in hohem Maße die Feuchtigkeit durch die Funktionsschicht nach außen diffundieren kann. Dadurch wird auch dem Benutzer die üblicherweise bei Verwendung von herkömmlichen luftundurchlässigen Folien vermittelte Vorstellung des Lebens in hermetisch versiegelten Wohnräumen nämlich des Plastiktütentyps beseitigt.

Darüber hinaus vermitteln die nunmehr nicht mehr, zumindest aber in sehr geringem Umfang, mit Wachsen oder Ölen zu behandelnden oder chemisch zu imprägnierenden Holzteile des Dachtragewerks ein Wohngefühl, daß nur unwesentliche Schadstoffkonzentrationen in der Dachgeschoßwohnung vorhanden sind.

Auch zeichnet sich die erfindungsgemäße Unterspannbahn durch hohe Umweltverträglichkeit aus. Das als Funktionsschicht von Abdeckungen häufig verwendete Polytetrafluorethylen, wie in US-A-4 452 848 offenbart, zeichnet sich im Falle von Hausbränden durch die Bildung von z.T. äußerst toxischen Halogenverbindungen, wie fluorhaltigen Zersetzungsprodukten, Fluorphosgen, Carbonylfluorid, Tetrafluorethylen, Perfluorisobutylen, Fluorwasserstoff, Trifluoracetylfluorid oder Perfluorisobuten, aus, was nicht nur die Gefahr der Rauchvergiftungen der Bewohner erhöht sondern auch das Löschen von Hausbränden für das Löschpersonal stark erschwert. Demgegenüber erweist sich die erfindungsgemäße Unterspannbahn bei Bränden als im wesentlichen frei von gesundheitsschädlichen Halogenverbindungen.

Zudem wird durch die erfindungsgemäße Unterspannbahn ermöglicht, die in großen Mengen bei Haus- oder Dachstuhlrenovierungen oder Abriß anfallende Unterspannbahnen über bereits bekannte Recyclingssysteme und -verfahren wiederzuverwerten.

Aufgrund der hohen Wasserdampfdurchlässigkeit der Funktionsschicht der erfindungsgemäßen Unterspannbahn ist darüber hinaus die Verwendung von annähernd baufeuchtem oder schnittfrischem Holz sowohl bei Einsatz im Dachtragwerk als auch als Innenverkleidung von Dachgeschoßwohnung ohne weiteres möglich, da z.B. beim Kaltdach eine ständige Entfeuchtung des Zwischenraums zwischen der oberen und der unteren Schale sowohl über die Abund Zuluftöffnungen als auch über die großflächige erfindungsgemäße Unterspannbahn erfolgen kann. Zudem zeigt sich, daß vorzugsweise die erfindungsgemäße Unterspannbahn in belüfteten oder unbelüfteten Flachdächern verlegt werden kann.

Auch kann die erfindungsgemäße Unterspannbahn überall dort benutzt werden, wo zusätzliche Maßnahmen zur Verhinderung der Vernässung auftreten, da die erfindungsgemäße Unterspannbahn neben der Luftundurchlässigkeit über eine Wasserdichtigkeit (nach DIN 53 887) und Winddichtigkeit verfügt. Zudem tritt kein Wasser in flüssiger Form durch die Unterspannbahn wegen des mangelnden Wasserdurchtritts (bei einschichtiger Unterspannbahn: mindestens 1 bar = 10 m Wassersäule; bei mehrschichtiger Unterspannbahn: >>1 bar = 10 m Wassersäule ASTM D-751 (Mullen-Test)).

Ein weiterer Gegenstand der Erfindung ist ein Verfahren zur Herstellung eines wärmeisolierten, Wärmekonvektionsverlust vermeidenden Dachs des belüfteten Typs, welches dadurch gekennzeichnet ist, daß die erfindungsgemäße Unterspannbahn auf der Dachgeschoßwohnung abgewandten Seite einer Wärmedämmschicht bzw. Sparren, vorzugsweise unter Beibehaltung eines Zwischen- oder Belüftungsraums zwischen der Unterspannbahn und den Sparren, verlegt wird und vorzugsweise Zu- und/oder Abluftöffnungen im First-, Grat-, Trauf- und/oder im Kehlbereich angeordnet werden. Die Wärmedämmschicht ist vorzugsweise die zwischen den Sparren angeordnete Wärmedämmlage.

Bei geneigten Dächern des belüfteten Typs mit ausgebauten Dachgeschossen, bei denen die Decke und die Dämmschicht unter den Sparren angebracht ist, zeigt es sich oft, daß nur ein geringer Raum zwischen der Dämmschicht und der Dachhaut mit der Unterspannbahn verbleibt, so daß der langsame Belüftungsstrom ohne Ausschöpfung seines vollen Transportvermögens die nur gering auftretende Feuchtigkeit wegtransportiert. Dabei erweist sich das erfindungsgemäße Verfahren zur Herstellung eines wärmeisolierten, Wärmekonvektionsverlust vermeidenden Dachs des belüfteten Typs als besonders vorteilhaft, da hierbei aufgrund hervorragenden Feuchtigkeitstransports durch die erfindungsgemäße Unterspannbahn im Belüftungsraum weit mehr Feuchtigkeit auftritt, die von dem Belüftungsstrom - wenn auch langsam, jedoch nunmehr unter Ausnutzung seiner vollen Kapazität an Feuchtigkeitsaufnahmeentfernt wird.

Ebenso wird das Auftreten von Tauwasser in den sogenannten Toträumen des Belüftungsraums des Kaltdachs durch den durch die erfindungsgemäße Unterspannbahn gewährleisteten Feuchtigkeitstransport verhindert.

Auch zeigt sich in diesem Zusammenhang, daß baufrisches Bauholz trotz seines recht hohen Feuchtigkeitsgehaltes in Dachgeschossen eingebaut werden kann, ohne daß die Gefahr besteht, daß die bei der langsamen Austrocknung aus dem Holz entweichende Feuchtigkeit sich an Kältebrücken, z.B. an den unter den Dachziegeln angeordneten Konterlattungen, niederschlägt.

Es ist vorteilhaft, wenn die Funktionsschicht pigmentiert ist. Vorzugsweise sind die Pigmente gleichmäßig in dem die Funktionsschicht aufbauenden Polymer dispergiert. Als Pigmente sind die üblichen anorganischen und organischen Pigmente geeignet, insbesondere Kohlenstoff, vor allem in Form von Ruß.

### Ausführungsbeispiele

Weitere Einzelheiten, Aspekte und Vorteile der Erfindung ergeben sich aus der nachfolgenden Beschreibung unter Bezugnahme auf die Zeichnungen. Es zeigen aufgrund einer zeichnerischen Vereinfachung in schematischer, stark vergrößerter Weise ohne Anspruch auf eine maßstabsgetreue Wiedergabe
Fig. 1 die oberhalb von Sparren verlegte erfindungsgemäße Unterspannbahn
Fig. 2 die auf Sparren verlegte erfindungsgemäße Unterspannbahn
Fig. 3 die oberhalb von Sparren verlegte erfindungsgemäße Unterspannbahn

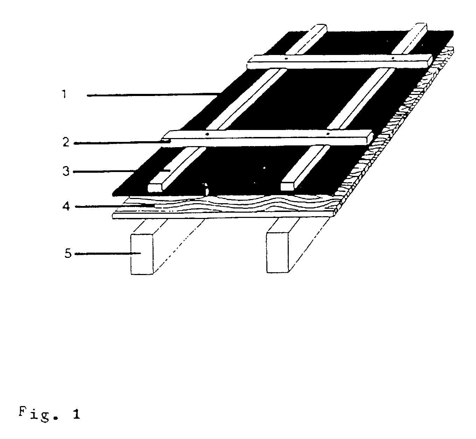

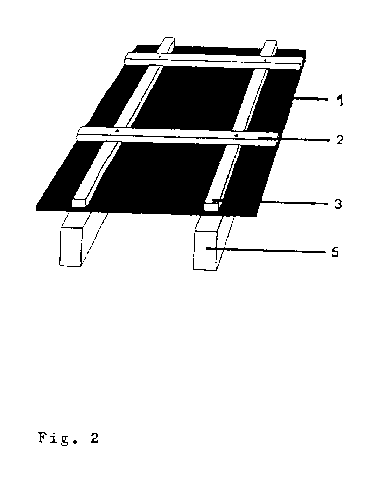

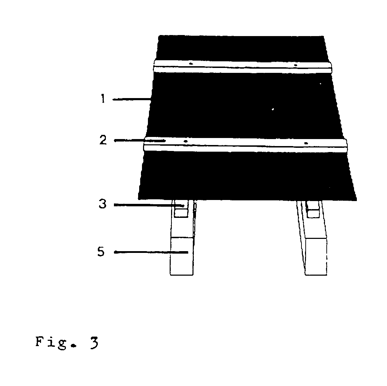

Die erfindungsgemäße Unterspannbahn 1 kann in einem Ausführungsbeispiel auf der Schalung 4 verlegt sein, welche auf den Sparren 5 aufliegt (Fig. 1). Weiterhin ist es möglich, daß die erfindungsgemäße Unterspannbahn 1 zwischen den Sparren 5 und den Konterlatten 3 sich befindet, wobei in diesem Fall das Dach keine Schalung 4 aufweist (Fig. 2). Weiterhin eignet sich die erfindungsgemäße Unterspannbahn 1 zum Verlegen oberhalb der Sparren 5 auf den Konterlatten 3, welche auf den Sparren 5 befestigt sind (Fig. 3).

Die erfindungsgemäße Unterspannbahn wird bei einem belüfteten geneigten Dach traufparallel im rechten Winkel zu den Sparren gegen die Dachneigung von unten nach oben verlegt mit einer Überdeckungsbreite von ca. 25 cm, wobei die Unterspannbahn mit einem leichtem Zug ohne Durchhang zwischen den Sparrenfeldern verlegt wird. Die Überlappungen werden punktweise mit einem Kleber einseitig verklebt. Die erfindungsgemäße Unterspannbahn ist ein zweischichtiges Laminat, welches eine textile Stützschicht aus Colback-Vlies (Akzo) (Colback als Warenzeichen eingetragen) und eine Funktionsschicht aus Copolyetherester, die sich von längerkettigen Polyglykolen, kurzkettigen Glykolen mit 2 bis 4 Kohlenstoffatomen und Dicarbonsäuren ableiten, als Copolyetherester-Membran mit einer Schichtdicke von 20 m aufweist. Colback, ein Spinnvlies aus Zweikomponenten-Filamenten mit einem Polyester-Kern und einem Polyamidmantel, ist ein wärmegefertigtes Material.

Die erfindungsgemäße Unterspannbahn wird auf den Sparrenrükken mittels Konterlatten beaufschlagt und befestigt. Die Verlegung der erfindungsgemäßen Unterspannbahnen erfolgt über den Grat hinweg mit einer Überdeckung von 25 cm, so daß die gesamte Dachtrage- und Dämmkonstruktion abgedeckt und geschützt ist. Die Ziegellatten werden im rechten Winkel zu der Längsrichtung der Konterlatten auf den Konterlatten genagelt und schließlich mit Hohlpfannen versehen.

Im Falle der Verwendung von baufeuchtem oder frischgeschlagenem Bauholz kann eine schnelle und konstante Austrocknung desselben beobachtet werden, ohne daß Bläue-Schimmel-Schwamm-Bildung gerade auch in dem Belüftungsraum zwischen der oberen und der unteren Schale entsteht. Weiterhin tritt kein Tauwasser in dem Belüftungsraum auf, da die mit der erfindungsgemäßen Unterspannbahn versehenen obere Schale mit Belüftungsraum zumindest genauso dampfdurchlässig ist wie die untere Schale. Es zeigt sich sogar, daß wegen der durch die erfindungsgemäße Unterspannbahn unterstützenden Wirkung des Abtransports der Feuchtigkeit des Belüftungsraums über die Zuluftöffnungen in den Traufbereichen des Daches eine Imprägnierung des die Dachziegeln tragenden Holzwerks verringert werden kann.

Darüber hinaus bleibt das Raumklima des annähernd mit baufeuchtem Holz ausgebauten beheizten Dachgeschosses ausgewogen und wird als behaglich von den Benutzern empfunden, wobei die Raumlufttemperatur bei 19 - 22°C und die Luftfeuchtigkeit 35 bis 65 % betragen, so daß sich ein ständiges Lüften des Dachgeschosses, abgesehen von dem zwecks Gasaustauschs notwendigen, im Gegensatz zu herkömmlichen Unterspannbahnen wegen zu hoher Feuchtigkeit und wegen der als stickig empfundenen Innenraumluft erübrigt, unter der Voraussetzung, daß die Dachkonstruktion ausgewogen wasserdampfdurchlässig ausgestaltet ist.

## Patentansprüche

1. Unterspannbahn zum Einbau in Dächern zur Verhinderung von Wärmekonvektionsverlusten und zur Verbesserung des Raumklimas, welche zweischichtig aufgebaut ist und aus einer nichtporösen, wasserdichten, wasserdampfdurchlässigen Funktionsschicht, welche Polymere auf Copolyetherestergrundlage und/oder Copolyetheramidgrundlage enthält, und einer wasserdampfdurchlässigen, synthetische Chemiefasern enthaltenden Stützschicht besteht.

2. Unterspannbahn nach Anspruch 1, dadurch gekennzeichnet, daß die Stüzschicht ein Vlies, Filz, eine Wirkware und/oder ein Gewebe vorzugsweise mit Faden- oder Gitterverstärkung ist.

3. Unterspannbahn nach Anspruch 2, dadurch gekennzeichnet, daß die wasserdampfdurchlässige Stützschicht porös ist.

4. Unterspannbahn nach einem der Ansprüche 1 bis 3, dadurch gekennzeichnet, daß die synthetischen Chemiefasern mindestens einen Vertreter der Polyester-, Polyamid-, Polyacryl-, Polyvinylchloridfasern oder Mischungen derselben umfassenden Gruppe enthalten.

5. Unterspannbahn nach einem der Ansprüche 1 bis 4, dadurch gekennzeichnet, daß die Stützschicht ein Flächengewicht von 30 bis 500 g/m2, vorzugsweise von 50 bis 250 g/m2, aufweist.

6. Unterspannbahn nach einem der Ansprüche 1 bis 5, dadurch gekennzeichnet, daß die Funktionsschicht mit der Stützschicht adhäsiv verbunden ist.

7. Unterspannbahn nach einem der Ansprüche 1 bis 6, dadurch gekennzeichnet, daß die Funktionsschicht mit der Stützschicht punkt-, gitter-, insel-, labyrinth- und / oder streifenförmig verklebt ist.

8. Unterspannbahn nach einem der Ansprüche 1 bis 7, dadurch gekennzeichnet, daß die Funktionsschicht eine Schichtdicke von 10 bis 300 µm, vorzugsweise von 25 bis 100 µm, aufweist.

9. Unterspannbahn nach einem der Ansprüche 1 bis 8, dadurch gekennzeichnet, daß die Unterspannbahn in Form von Bahn, Blatt oder Platte ausgebildet ist.

10. Unterspannbahn nach einem der Ansprüche 1 bis 9, dadurch gekennzeichnet, daß die Polymere Copolyetherester sind, die sich von längerkettigen Polyglykolen, kurzkettigen Glykolen mit 2 bis 4 Kohlenstoffatomen und Dicarbonsäuren ableiten.

11. Unterspannbahn nach einem der Ansprüche 1 bis 10, dadurch gekennzeichnet, daß die Polymere Copolyetherester sind, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 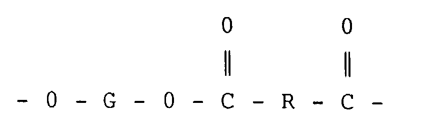 und die kurzkettigen Estereinheiten der Formel 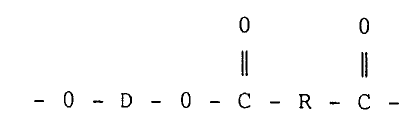 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol % der verwendeten Dicarbonsäure aus Terephthalsäure oder ihren esterbildenden Äquivalenten und zumindest 80 Mol % des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20% beträgt und die kurzkettigen Estereinheiten 40 - 80 Gew.% des Copolyetheresters betragen.

12. Unterspannbahn nach einem der Ansprüche 1 bis 11, dadurch gekennzeichnet, daß die Polymere ganz oder teilweise Copolyetherester sind, worin mindestens 70 Mol % der verwendeten Dicarbonsäure 2,6-Naphthalindicarbonsäure oder deren Ester bildenden Äquivalente sind und bei dem mindestens 70 Mol.% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende Äquivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew.% des Copolyetheresters ausmachen.

13. Unterspannbahn nach einem der Ansprüche 1 bis 12, dadurch gekennzeichnet, daß die Polymere Copolyetherester sind, worin die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 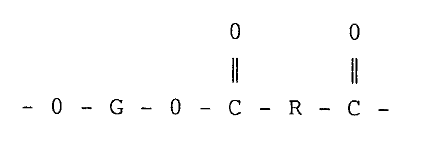 und die kurzkettigen Estereinheiten der Formel 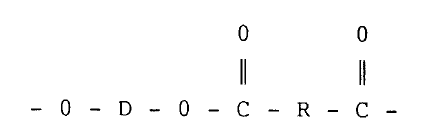 entsprechen, wobei G einen zweiwertigen Rest darstellt, der nach der Entfernung von endständigen Hydroxylqruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol% von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew.% des Copolyetheresters betragen.

14. Unterspannbahn nach einem der Ansprüche 1 bis 13, dadurch gekennzeichnet, daß die Unterspannbahn als einschichtige Folie eine Schichtdicke der Funktionsschicht von 50- 1000 µm aufweist.

15. Unterspannbahn nach einem der Ansprüche 1 bis 13, dadurch gekennzeichnet, daß die Unterspannbahn als mehrschichtiger Film eine Schichtdicke der Funktionsschicht von 10 - 50 µm aufweist.

16. Verwendung der Unterspannbahn nach einem der Ansprüche 1 bis 15 in Flachdächern oder geneigten Dächern des unbelüfteten oder belüfteten Typs.

17. Verfahren zur Herstellung eines wärmeisolierten, Wärmekonvektionsverlust vermeidenden Dachs des belüfteten Typs, dadurch gekennzeichnet, daß die Unterspannbahn nach einem der Ansprüche 1 bis 15 auf oder oberhalb der der Dachgeschoßwohnung abgewandten Seite einer Wärmedämmschicht bzw. Sparren, vorzugsweise unter Beibehaltung eines Belüftungsraums zwischen der Unterspannbahn und den Sparren, verlegt wird.

## Claims

1. An underlay for fitting in roofs to prevent convective heat losses and to improve room air conditions, which underlay has a two-layer structure and consists of a non-porous, water-tight, water vapour-permeable functional layer, comprising copolyether ester-based and/or copolyether amide-based polymers, and a water vapour-permeable backing layer comprising synthetic man-made fibres.

2. An underlay according to claim 1, characterised in that the backing layer is a nonwoven, felt, a knitted fabric and/or a woven, preferably with yarn or lattice reinforcement.

3. An underlay according to claim 2, characterised in that the water vapour-permeable backing layer is porous.

4. An underlay according to any one of claims 1 to 3, characterised in that the synthetic man-made fibres include at least one representative of the group comprising polyester, polyamide, polyacrylic or polyvinyl chloride fibres or mixtures thereof.

5. An underlay according to any one of claims 1 to 4, characterised in that the backing layer has a weight per unit area of from 30 to 500 g/m², preferably from 50 to 250 g/m².

6. An underlay according to any one of claims 1 to 5, characterised in that the functional layer is connected to the backing layer by adhesion.

7. An underlay according to any one of claims 1 to 6, characterised in that the functional layer is adhered to the backing layer in punctiform, lattice-type, insular, labyrinthine and/or strip-like manner.

8. An underlay according to any one of claims 1 to 7, characterised in that the thickness of the functional layer ranges from 10 to 300 µm, preferably from 25 to 100 µm.

9. An underlay according to any one of claims 1 to 8, characterised in that the underlay takes the form of a web, a sheet or a plate.

10. An underlay according to any one of claims 1 to 9, characterised in that the polymers are copolyether esters which are derived from relatively long-chain polyglycols, short-chain glycols with from 2 to 4 carbon atoms and dicarboxylic acids.

11. An underlay according to any one of claims 1 to 10, characterised in that the polymers are copolyether esters which consist of a plurality of recurrent intralinear long-chain and short-chain ester units, which are randomly linked head-to-tail via ester bonds, wherein the long-chain ester units correspond to the formula 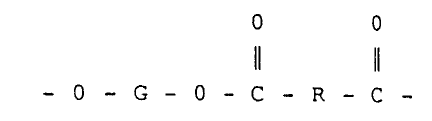 and the short-chain ester units correspond to the formula 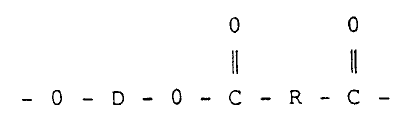 wherein G represents a divalent residue remaining after the removal of terminal hydroxyl groups from at least one long-chain glycol with an average molecular weight of from 600 to 6000 and an atomic ratio of carbon to oxygen of between 2.0 and 4.3, wherein at least 20 wt.% of the long-chain glycol has an atomic ratio of carbon to oxygen of between 2.0 and 2.4 and constitutes from 15 to 50 wt.% of the copolyether ester, R represents a divalent residue remaining after the removal of carboxyl groups from at least one dicarboxylic acid with a molecular weight of less than 300, and D represents a divalent residue remaining after the removal of hydroxyl groups from at least one diol with a molecular weight of less than 250, wherein at least 80 mol.% of the dicarboxylic acid used consists of terephthalic acid or its ester-forming equivalents and at least 80 mol.% of the low molecular weight diol consists of 1,4-butanediol or the ester-forming equivalents thereof, the sum of the molar percentages of the dicarboxylic acid not representing terephthalic acid or ester-forming equivalents thereof and the low molecular weight diol not representing 1,4-butanediol or the ester-forming equivalents thereof amounts to 20 % at most and the short-chain ester units amount to from 40 to 80 wt.% of the copolyether ester.

12. An underlay according to any one of claims 1 to 11, characterised in that the polymers are wholly or in part copolyether esters, in which at least 70 mol.% of the dicarboxylic acid used is 2,6-naphthalenedicarboxylic acid or the ester-forming equivalents thereof and in which at least 70 mol.% of the low molecular weight diol used is 1,4-butanediol or the ester-forming equivalents thereof and the sum of the molar percentages of the dicarboxylic acid which is not 2,6-naphthalenedicarboxylic acid or the ester-forming equivalents thereof and the low molecular weight diol which is not 1,4-butanediol or the ester-forming equivalents thereof amounts to 30 % at most, and the short-chain ester units constitute from 35 to 80 wt.% of the copolyether ester.

13. An underlay according to any one of claims 1 to 12, characterised in that the polymers are copolyether esters, these consisting of a plurality of recurrent intralinear long-chain and short-chain ester units, which are randomly linked head-to-tail by ester bonds, wherein the long-chain ester units correspond to the formula 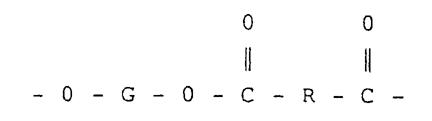 and the short-chain ester units correspond to the formula 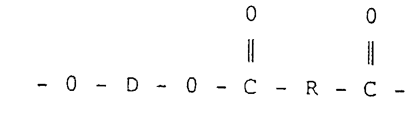 wherein G represents a divalent residue remaining after removal of the terminal hydroxyl groups from at least one long-chain glycol with an average molecular weight of from 600 to 4000 and an atomic ratio of carbon to oxygen of between 2.0 and 4.3, wherein at least 20 wt.% of the long-chain glycol has an atomic ratio of carbon to oxygen of between 2.0 and 2.4 and constitutes from 15 to 50 wt.% of the copolyether ester, R represents a divalent residue remaining after the removal of carboxyl groups from at least one dicarboxylic acid with a molecular weight of less than 300, and D represents a divalent residue remaining after the removal of hydroxyl groups from at least one diol with a molecular weight of less than 250, wherein at least 70 mol.% of the dicarboxylic acid used consists of 2,6-naphthalenedicarboxylic acid or its ester-forming equivalents and at least 70 mol.% of the low molecular weight diol consists of 1,4-butanediol or the ester-forming equivalents thereof and the sum of the molar percentages of the dicarboxylic acid which is not 2,6-naphthalenedicarboxylic acid or its ester-forming equivalents and the low molecular weight diol which is not 1,4-butanediol or the ester-forming equivalents thereof amounts to 30 % at most and the short-chain ester units amount to from 35 to 80 wt.% of the copolyether ester.

14. An underlay according to any one of claims 1 to 13, characterised in that the thickness of the functional layer of the underlay is from 50 - 1000 µm, when the latter takes the form of a single-layer sheet.

15. An underlay according to any one of claims 1 to 13, characterised in that the thickness of the functional layer of the underlay is from 10 - 50 µm, when the latter takes the form of a multi-layer film.

16. Use of the underlay according to any one of claims 1 to 15 in flat roofs or sloping roofs of the ventilated or unventilated type.

17. A method of producing a thermally insulated, convective heat loss-preventing roof of the ventilated type, characterised in that the underlay according to any one of claims 1 to 15 is placed on or above that side of a heat-insulating layer or rafters which is remote from the attic space, a ventilation space preferably being retained between the underlay and the rafters.

## Revendications

1. Bande de revêtement isolant de toits destinée à empêcher les pertes de chaleur par convection et à améliorer l'atmosphère des habitations, laquelle bande a une structure bi-couche et est constituée d'une couche fonctionnelle non poreuse, imperméable à l'eau et perméable à la vapeur d'eau, contenant des polymères de type copoly(éther ester) et/ou copoly(éther amide), et d'une couche support perméable à la vapeur d'eau et contenant des fibres synthétiques.

2. Bande de revêtement isolant selon la revendication 1, caractérisée en ce que la couche support est un non-tissé, du feutre, un tricot et/ou un tissé, renforcé de préférence par un système de fils uni- ou bidirectionnel.

3. Bande de revêtement selon la revendication 2, caractérisée en ce que la couche support perméable à la vapeur d'eau est poreuse.

4. Bande de revêtement selon l'une quelconque des revendications 1 à 3, caractérisée en ce que les fibres synthétiques contiennent au moins un des éléments du groupe formé par les fibres de polyester, les fibres en polyamide, les fibres polyacryliques, les fibres de poly(chlorure de vinyle) ou des mélanges de celles-ci.

5. Bande de revêtement selon l'une quelconque des revendications 1 à 4, caractérisée en ce que la couche support a une masse surfacique comprise dans l'intervalle allant de 30 à 500 g/m², de préférence de 50 à 250 g/m².

6. Bande de revêtement selon l'une quelconque des revendications 1 à 5, caractérisée en ce que la couche fonctionnelle est liée par adhésion à la couche support.

7. Bande de revêtement selon l'une quelconque des revendications 1 à 6, caractérisée en ce que la couche fonctionnelle est collée à la couche de support selon un motif de collage à points, à quadrillage, à îlots, de type labyrinthe et/ou à bandes.

8. Bande de revêtement selon l'une quelconque des revendications 1 à 7, caractérisée en ce que la couche fonctionnelle a une épaisseur comprise dans l'intervalle allant de 10 à 300 µm, de préférence de 25 à 100 µm.

9. Bande de revêtement selon l'une quelconque des revendications 1 à 8, caractérisée en ce que la bande de revêtement se présente sous forme d'une bande, d'une feuille ou d'une plaque.

10. Bande de revêtement selon l'une quelconque des revendications 1 à 9, caractérisée en ce que les polymères sont des copoly(éther ester) préparés à partir de polyglycols à longue chaîne, de glycols à chaîne courte comportant de 2 à 4 atomes de carbone et d'acides dicarboxyliques.

11. Bande de revêtement selon l'une quelconque des revendications 1 à 10, caractérisée en ce que les polymères sont des copoly(éther ester) constitués d'une multitude de motifs ester récurrents à chaîne longue ou courte, faisant partie de la chaîne principale, lesquels motifs sont reliés statistiquement entre eux par des liaisons ester tête-à-queue, les motifs ester à longue chaîne correspondant à la formule 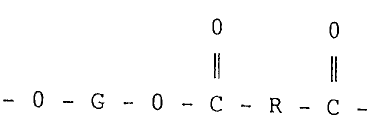 et les motifs ester à chaîne courte correspondant à la formule 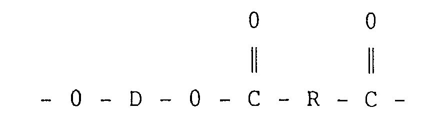 où
G représente le résidu divalent qui reste après élimination des groupes hydroxyle terminaux d'au moins un glycol à longue chaîne ayant une masse moléculaire moyenne comprise entre 600 et 6000 et un rapport des atomes de carbone aux atomes d'oxygène compris entre 2,0 et 4,3, au moins 20 % en poids du glycol à longue chaîne présentant un rapport des atomes de carbone aux atomes d'oxygène compris entre 2,0 et 2,4 et représentant de 15 à 50 % en poids du copoly(éther ester),
R représente le résidu divalent qui reste après élimination des groupes carboxyle d'un acide dicarboxylique ayant une masse moléculaire inférieure à 300, et
D représente le résidu divalent qui reste après élimination des groupes hydroxyle d'au moins un diol ayant une masse moléculaire inférieure à 250, au moins 80 % en moles de l'acide dicarboxylique utilisée étant de l'acide téréphtalique ou un composé équivalent capable de former des esters, et au moins 80 % en moles du diol à faible masse moléculaire étant du 1,4-butanediol ou un composé équivalent capable de former des esters, le pourcentage total en moles d'acide dicarboxylique autre que l'acide téréphtalique ou un composé équivalent capable de former des esters, et du diol à faible masse moléculaire autre que le 1,4-butanediol ou un composé équivalent capable de former des esters, étant au plus égal à 20 %, et les motifs ester à chaîne courte représentant de 40 à 80 % en poids du copoly(éther ester).

12. Bande de revêtement selon l'une quelconque des revendications 1 à 11, caractérisée en ce que les polymères sont en partie ou en totalité des copoly(éther ester), au moins 70 % en moles de l'acide dicarboxylique utilisé étant de l'acide 2,6-naphtalènedicarboxylique ou un composé équivalent capable de former des esters, et au moins 70 % en moles du diol à faible masse moléculaire utilisé étant du 1,4-butanediol ou un composé équivalent capable de former des esters, et le pourcentage total en moles d'acide dicarboxylique autre que l'acide 2,6-naphtalènedicarboxylique ou un composé équivalent capable de former des esters, et de diol à faible masse moléculaire autre que le 1,4-butanediol ou un composé équivalent capable de former des esters, étant au plus égal à 30 % en poids, et les motifs esters à chaîne courte représentant de 35 à 80 % en poids du copoly(éther ester).

13. Bande de revêtement selon l'une quelconque des revendications 1 à 12, caractérisée en ce que les polymères sont des copoly(éther ester) constitués d'une multitude de motifs ester récurrents, à chaîne longue ou courte, faisant partie de la chaîne principale, lesquels motifs sont reliés statistiquement entre eux par des liaisons ester tête-à-queue, les motifs ester à longue chaîne correspondant à la formule 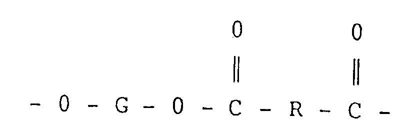 et les motifs ester à chaîne courte correspondant à la formule 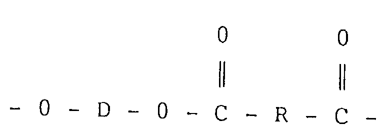 où
G représente le résidu divalent qui reste après élimination des groupes hydroxyle terminaux d'au moins un glycol à longue chaîne ayant une masse moléculaire moyenne comprise entre 600 et 4000 et un rapport des atomes de carbone aux atomes d'oxygène compris entre 2,0 et 4,3, au moins 20 % en poids du glycol à longue chaîne présentant un rapport des atomes de carbone aux atomes d'oxygène compris entre 2,0 et 2,4 et représentant de 15 à 50 % en poids du copoly(éther ester),
R représente le résidu divalent qui reste après élimination des groupes carboxyle d'un acide dicarboxylique ayant une masse moléculaire inférieure à 300, et
D représente le résidu divalent qui reste après élimination des groupes hydroxyle d'au moins un diol ayant une masse moléculaire inférieure à 250, au moins 70 % en moles de l'acide dicarboxylique utilisée étant de l'acide 2,6-naphtalènedicarboxylique ou un composé équivalent capable de former des esters, et au moins 70 % en moles du diol faible masse moléculaire étant du 1,4-butanediol ou un composé équivalent capable de former des esters, le pourcentage total en moles d'acide dicarboxylique autre que l'acide 2,6-naphtalènedicarboxylique ou un composé équivalent capable de former des esters, et du diol à faible masse moléculaire autre que le 1,4-butanediol ou un composé équivalent capable de former des esters, étant au plus égal à 30 %, et les motifs ester à chaîne courte représentant de 35 à 80 % en poids du copoly(éther ester).

14. Bande de revêtement selon l'une quelconque des revendications 1 à 13, caractérisée en ce que la bande de revêtement se présente sous forme d'une feuille mono-couche ayant une couche fonctionnelle d'une épaisseur de 50 - 1000 µm.

15. Bande de revêtement selon l'une quelconque des revendications 1 à 13, caractérisée en ce que la bande de revêtement se présente sous forme d'un film multi-couche ayant une couche fonctionnelle d'une épaisseur comprise entre 10 et 50 µm.

16. Utilisation de la bande de revêtement selon l'une des revendications 1 à 15 dans des toits plats ou des toits en pente de type aéré ou non-aéré.

17. Procédé de fabrication d'un toit de type aéré à isolation thermique permettant d'éviter les pertes de chaleur par convection, caractérisé en ce que l'on pose la bande de revêtement isolant selon l'une des revendications 1 à 15 au-dessus ou sur la face, opposée aux combles, d'une couche d'isolation thermique ou de chevrons, en maintenant de préférence un espace d'aération entre la bande de revêtement isolant et les chevrons.
